# EUROPÄISCHE PATENTSCHRIFT

(11) **EP 4 009 495 B1**
(45) Veröffentlichungstag und Bekanntmachung des Hinweises auf die Patenterteilung: **27.08.2025**
(21) Anmeldenummer: 21211666.9
(22) Anmeldetag: 01.12.2021
(51) Int. Cl.: H02K 1/276, H02K 29/03

(54) **ROTOR EINER ELEKTRISCHEN MASCHINE**
ROTOR OF AN ELECTRIC MACHINE
ROTOR D'UNE MACHINE ÉLECTRIQUE

(30) Priorität: 03.12.2020 DE 102020215316
(43) Veröffentlichungstag der Anmeldung: 08.06.2022
(73) Patentinhaber: Valeo eAutomotive Germany GmbH, 91056 Erlangen (DE)
(72) Erfinder: Finger-Albert, Christian, 97616 Bad Neustadt a.d.Saale (DE); Dotz, Boris, 97616 Bad Neustadt a.d.Saale (DE)
(74) Vertreter: Valeo Powertrain Systems

(56) Entgegenhaltungen:
- DE-A1- 102018 123 706
- US-A1- 2011 050 022
- US-A1- 2017 104 376
- US-B2- 7 042 127

## Beschreibung

### TECHNISCHES GEBIET

Die Erfindung betrifft einen Rotor für eine elektrische Maschine, welcher ein in mehrere Sektoren untergliedertes Rotorblechpaket umfasst, in denen jeweils eine Permanentmagnetanordnung angeordnet ist, die zwei erste Permanentmagnete umfasst, die von einer Rotationsachse des Rotors aus gesehen V-förmig und symmetrisch bezüglich einer den Sektor in zwei Halbsektoren teilenden Symmetrieebene positioniert sind. Eine Außenkontur des Rotorblechpakets verläuft in einem jeweiligen Sektor symmetrisch bezüglich der Symmetrieebene. Weiterhin wird eine elektrische Maschine mit einem solchen Rotor angegeben, sowie ein Fahrzeug mit einer solchen elektrischen Maschine.

### STAND DER TECHNIK

Aufgrund der Anordnung der im Rotor vorgesehenen Permanentmagnete kommt es im Betrieb der elektrischen Maschine zu unerwünschten Drehmomentschwankungen. Diese können durch Variation des Luftspalts zwischen dem Rotor und dem Stator über dem Umfang verringert werden. Nachteilig ist dabei, dass die dabei entstehende Außenkontur Ergebnis einer mathematischen Berechnung ist und eine vergleichsweise komplexe Form aufweist. Diese Komplexität erzeugt einerseits Probleme bei der Datenweitergabe und andererseits bei der Herstellung des Rotors. Insbesondere können Kompatibilitätsprobleme zwischen verschiedenen Software-Plattformen und Missverständnisse bei der Datenweitergabe zwischen Entwicklungsabteilung und der Fertigung zu Fehlproduktion führen. Auch ist nicht jede Maschine - selbst wenn sie computergesteuert ist - in der Lage, komplizierte Formen herzustellen. Im Endergebnis fehlt es an einer einfachen Beschreibung der Außenkontur des Rotors beziehungsweise des Rotorblechpakets, welche einerseits Drehmomentschwankungen im Betrieb der elektrischen Maschine verringert, andererseits aber auch eine einfache Datenweitergabe und einfache Herstellung des Rotors beziehungsweise des Rotorblechpakets ermöglicht.

Die Dokumente US 2017/104376 A1, DE 10 2018 123706 A1, US 2011/050022 A1 und US 7 042 127 B2 offenbaren Läufer mit Permanentmagneten.

### OFFENBARUNG DER ERFINDUNG

Eine Aufgabe der Erfindung ist es daher, einen verbesserten Rotor für eine elektrische Maschine, eine verbesserte elektrische Maschine sowie ein verbessertes Fahrzeug mit einer solchen elektrischen Maschine anzugeben. Insbesondere soll eine einfache Beschreibung der Außenkontur des Rotors beziehungsweise des Rotorblechpakets angegeben werden, welche einerseits Drehmomentschwankungen im Betrieb der elektrischen Maschine verringert, andererseits aber auch eine einfache Datenweitergabe und einfache Herstellung des Rotors beziehungsweise des Rotorblechpakets ermöglicht.

Die Aufgabe der Erfindung wird gelöst durch einen Rotor nach Anspruch 1.

Die Aufgabe der Erfindung wird auch mit einer elektrischen Maschine gelöst, welche einen Stator umfasst, sowie einen Rotor der oben genannten Art, der gegenüber dem Stator um die Rotationsachse des Rotors drehbar gelagert ist.

Schließlich wird die Aufgabe auch durch ein Fahrzeug mit wenigstens zwei Achsen gelöst, von denen wenigstens eine angetrieben ist, wobei der besagte Antrieb zumindest teilweise oder zeitweise durch die oben genannte elektrische Maschine erfolgt.

Mit Hilfe der vorgeschlagenen Maßnahmen können die eingangs genannten Nachteile überwunden werden. Insbesondere wird eine einfache Beschreibung der Außenkontur des Rotors beziehungsweise des Rotorblechpakets angegeben, welche einerseits Drehmomentschwankungen im Betrieb der elektrischen Maschine verringert, andererseits aber auch eine einfache Datenweitergabe und einfache Herstellung des Rotors beziehungsweise des Rotorblechpakets ermöglicht. Die Außenkontur wird dabei durch mindestens drei Radien mit unterschiedlichem Mittelpunkt beschrieben. Technische Probleme und Missverständnisse bei der Datenweitergabe werden durch die wenig komplexe Beschreibung der genannten Außenkontur vermieden, wodurch das Risiko führ Fehlproduktion eliminiert oder wenigstens drastisch verringert wird. Darüber hinaus sind selbst einfachste nummerische Steuerungen für Maschinen in der Lage, eine auf Radien basiere Kontur herzustellen.

In einer nicht erfindungsgemäßen Variante wird die Außenkontur des Rotorblechpakets in einem Halbsektor der Halbsektoren durch genau drei unterschiedliche Radien mit drei unterschiedlichen Mittelpunkten gebildet. Dadurch wird die Außenkontur des Rotors oder Rotorblechpakets mit besonders wenigen Radien angegeben.

Besonders vorteilhaft ist es dabei, wenn die Radien ausgehend von der Symmetrieebene von einem ersten Radius bis zu einem dritten Radius im Gegenuhrzeigersinn gereiht sind und
- der erste Radius 71,5% einer Bezugslänge beträgt,
- der zweite Radius 50% der Bezugslänge beträgt und
- der dritte Radius 74,4% der Bezugslänge beträgt.

In einer weiteren nicht erfindungsgemäßen Ausführungsform
- weist der erste Radius den Mittelpunkt 5,73% / -12,17° auf,
- weist der zweite Radius den Mittelpunkt 29,10% / 11,70° auf und
- weist der dritte Radius den Mittelpunkt 4,25% / 30,00° auf,
wobei die Mittelpunkte der Radien in Polarkoordinaten ausgehend von der Symmetrieebene mit 0° im Gegenuhrzeigersinn angegeben sind, wobei die Polarkoordinaten in der Form "Radius / Winkel" angegeben sind und wobei der Radius in Prozent der Bezugslänge angegeben ist.

Erfindungsgemäß wird die Außenkontur des Rotorblechpakets in einem Halbsektor der Halbsektoren durch genau vier unterschiedliche Radien mit vier unterschiedlichen Mittelpunkten gebildet. Dadurch können die Drehmomentschwankungen im Betrieb der elektrischen Maschine noch besser reduziert werden, ohne die Beschreibung der Außenkontur des Rotors oder Rotorblechpakets übermäßig zu verkomplizieren.

Besonders vorteilhaft ist es dabei, wenn die Radien ausgehend von der Symmetrieebene von einem ersten Radius bis zu einem vierten Radius im Gegenuhrzeigersinn gereiht sind und
- der erste Radius 71,5% einer Bezugslänge beträgt,
- der zweite Radius 100% der Bezugslänge beträgt,
- der dritte Radius 50% der Bezugslänge beträgt und
- der vierte Radius 74,4% der Bezugslänge beträgt.

In einer weiteren besonders vorteilhaften Ausführungsform
- weist der erste Radius den Mittelpunkt 7,70% / 0,00 ° auf,
- weist der zweite Radius den Mittelpunkt 21,05% / 193,18° auf,
- weist der dritte Radius den Mittelpunkt 29,10% / 11,70° auf und
- weist der vierte Radius den Mittelpunkt 4,25% / 29,58° auf,
wobei die Mittelpunkte der Radien in Polarkoordinaten ausgehend von der Symmetrieebene mit 0° im Gegenuhrzeigersinn angegeben sind, wobei die Polarkoordinaten in der Form "Radius / Winkel" angegeben sind und wobei der Radius in Prozent der Bezugslänge angegeben ist.

Die Bezugslänge kann in allen Fällen beliebig je nach gewünschter Größe des Rotors gewählt werden. Wird als Bezugslänge beispielsweise 100 mm gewählt, so ergibt sich zum Beispiel für den ersten Radius ein Absolutwert von 71,5 mm und so weiter.

Erfindungsgemäß ist es auch, wenn die Permanentmagnetanordnung zusätzlich zwei zweite, von der Rotationsachse des Rotors aus gesehen, V-förmig und symmetrisch bezüglich einer den Sektor in zwei Halbsektoren teilenden Symmetrieebene positionierte Permanentmagnete umfasst. Dadurch können die Drehmomentschwankungen im Betrieb der elektrischen Maschine weiter reduziert werden.

An dieser Stelle wird angemerkt, dass der Schutzbereich nicht auf genau die angegebenen nummerischen Werte beschränkt ist, sondern allgemein ein Toleranzbereich von insbesondere ±5%-Punkte der Bezugslänge beziehungsweise ±5° eines angegebenen Winkels als vom Schutzbereich umfasst anzusehen ist. Beträgt der erste Radius zum Beispiel nominal 71,5% einer Bezugslänge und liegt dessen Mittelpunkt auf 7,70% / 0,00 °, so gilt insbesondere ein Bereich von 66,5% bis 76,5% der Bezugslänge für den Radius, insbesondere ein Bereich von 2,7% bis 12,7% der Bezugslänge für den Zentrumsabstand des Mittelpunkts und insbesondere ein Bereich -5° bis +5° für den Winkel als vom Schutzbereich mit umfasst. Die obigen Ausgestaltungen und Weiterbildungen der Erfindung lassen sich auf beliebige Art und Weise kombinieren.

### KURZE BESCHREIBUNG DER FIGUREN

Ausführungsbeispiele der Erfindung sind exemplarisch in den beigefügten schematischen Figuren dargestellt. Es zeigen:
- Fig. 1: eine schematisch im Halbschnitt dargestellte, beispielhafte elektrische Maschine;
- Fig. 2: eine Vorderansicht des in Fig. 1 gezeigten Rotors;
- Fig. 3: eine Detailansicht eines Halbsektors des in Fig. 1 gezeigten Rotors in einer nicht erfindungsgemäßen Ausführungsform;
- Fig. 4: eine Detailansicht eines Halbsektors des in Fig. 1 gezeigten Rotors in einer erfindungsgemäßen Ausführungsform und
- Fig. 5: eine Prinzipskizze eines Fahrzeugs mit einer elektrischen Maschine mit dem erfindungsgemäßen Rotor.

### DETAILIERTE BESCHREIBUNG DER ERFINDUNG

Einführend wird festgehalten, dass gleiche Teile in den unterschiedlich Ausführungsformen mit gleichen Bezugszeichen beziehungsweise gleichen Bauteilbezeichnungen versehen werden, gegebenenfalls mit unterschiedlichen Indizes. Die in der Beschreibung enthaltene Offenbarungen eines Bauteils kann sinngemäß ein anderes Bauteil mit gleichem Bezugszeichen beziehungsweise gleicher Bauteilbezeichnung übertragen werden. Auch sind die in der Beschreibung gewählten Lageangaben, wie zum Beispiel "oben", "unten", "hinten", "vorne", "seitlich" und so weiter auf die unmittelbar beschriebene sowie dargestellte Figur bezogen und bei einer Lageänderung sinngemäß auf die neue Lage zu übertragen.

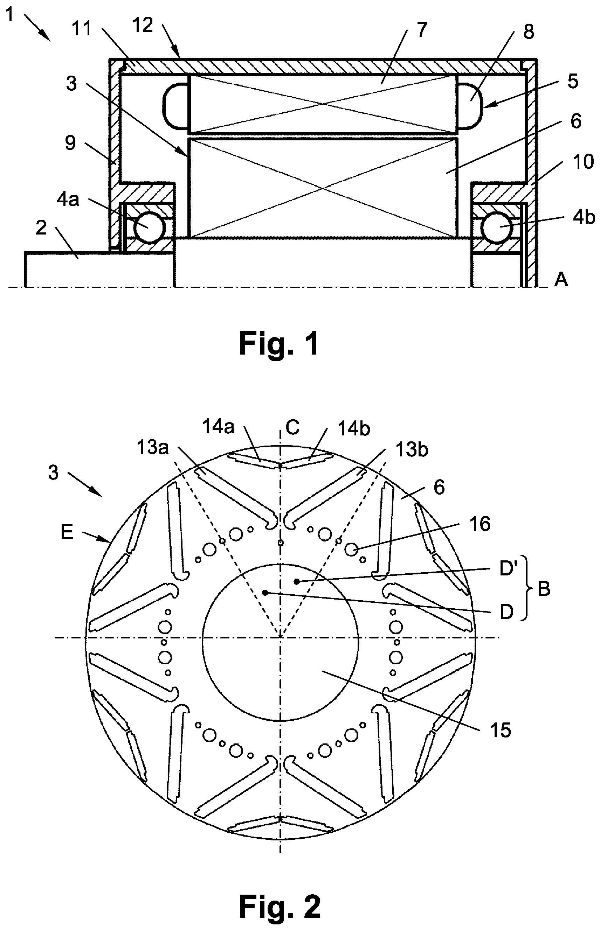

Fig. 1 zeigt einen Halbschnitt durch eine schematisch dargestellte elektrische Maschine 1. Die elektrische Maschine 1 umfasst, eine Welle 2 mit einem darauf sitzenden Rotor 3, wobei die Welle 2 mit Hilfe von (Wälz)lagern 4a, 4b um eine Drehachse A gegenüber einem Stator 5 drehbar gelagert ist. Der Rotor 3 weist in diesem Beispiel mehrere nicht im einzelnen dargestellte Rotorbleche auf, welche ein Rotorblechpaket 6 bilden. Der Stator 5 weist in diesem Beispiel mehrere nicht im einzelnen dargestellte Statorbleche auf, welche ein Statorblechpaket 7 bilden, sowie im Statorblechpaket 7 angeordnete Statorwicklungen 8. Konkret sitzt das erste Lager 4a in einem vorderen Lagerschild 9 und das zweite Lager 4b in einem hinteren Lagerschild 10. Weiterhin umfasst die elektrische Maschine 1
ein (mittleres) Gehäuseteil 11, welches das vordere Lagerschild 9 und das hintere Lagerschild 10 verbindet und den Stator 5 aufnimmt. Das vordere Lagerschild 9, das hintere Lagerschild 10 und das Gehäuseteil 11 bilden in diesem Beispiel das Gehäuse 12 der elektrische Maschine 1.

Fig. 2 zeigt den Rotor 3 der elektrischen Maschine 1 nun in Vorderansicht. Der Rotor 3 kann in diesem Beispiel in insgesamt sechs aneinander angrenzende Sektoren B untergliedert werden. In jedem Sektor B ist eine Permanentmagnetanordnung mit zwei ersten (von der Rotationsachse A aus gesehen) V-förmig und symmetrisch bezüglich einer Symmetrieebene C positionieren Permanentmagneten 13a, 13b angeordnet. Die Symmetrieebene C erstreckt sich in axialer und radialer Richtung des Rotors 1 und teilt den Sektor C in zwei Halbsektoren D, D'. Dabei liegt der Permanentmagnet 13a im Halbsektor D und der Permanentmagnet 13b im Halbsektor D'. Jeder Sektor C bildet einen Pol des Rotors 3. Der Rotor 3 beziehungsweise das Rotorblechpaket 6 weist eine von der Kreisform abweichende Außenkontur E auf, die in einem jeweiligen Sektor C symmetrisch bezüglich der Symmetrieebene B verläuft und in allen Sektoren C gleich ist.

Des Weiteren kann die Permanentmagnetanordnung 10 zwei optionale zweite (von der Rotationsachse A aus gesehen) V-förmig und symmetrisch bezüglich der Symmetrieebene C des Sektors B angeordnete Permanentmagnete 14a, 14b umfassen, wobei der Permanentmagnet 14a im Halbsektor D und der Permanentmagnet 14b im Halbsektor D' angeordnet sind. Ein radial innerster Punkt der zweiten Permanentmagnete 14a, 14b liegt radial weiter außen als ein radial innerster Punkt der ersten Permanentmagnete 13a, 13b.

Die Anzahl der Sektoren C beziehungsweise der Pole ist rein exemplarisch. Das heißt, die hier offenbarte technische Lehre ist auch auf eine von sechs abweichende Anzahl von Sektoren C beziehungsweise Polen uneingeschränkt anwendbar.

Darüber hinaus weist der Rotor 3 eine sich entlang der Drehachse A in Axialrichtung erstreckende Durchgangsbohrung 15 für die Rotorwelle 2 auf sowie weitere Bohrungen 16, die dem Ausrichten der Rotorbleche und/oder dem Wuchten des Rotors 3 dienen können.

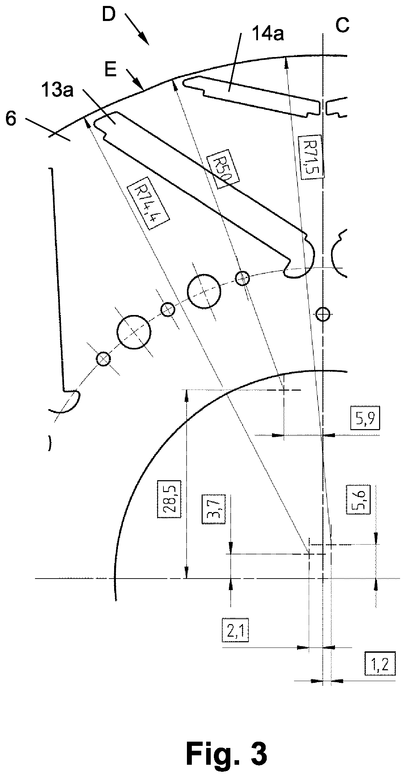

Fig. 3 zeigt nun eine Detaildarstellung des Halbsektors D einer nicht erfindungsgemäßen Ausführungsform. Die Außenkontur E des Rotors 3 beziehungsweise des Rotorblechpakets 6 ist in diesem Beispiel in einem Halbsektor D durch genau drei unterschiedliche Radien mit drei unterschiedlichen Mittelpunkten gebildet.

Vorzugsweise sind die Radien ausgehend von der Symmetrieebene C von einem ersten Radius bis zu einem dritten Radius im Gegenuhrzeigersinn gereiht, wobei
- der erste Radius 71,5% einer Bezugslänge beträgt,
- der zweite Radius 50% der Bezugslänge beträgt und
- der dritte Radius 74,4% der Bezugslänge beträgt.

Bevorzugt sind die Mittelpunkte der genannten Radien dabei wie folgt angeordnet:
- der erste Radius weist den Mittelpunkt 5,73% / -12,17° auf,
- der zweite Radius weist den Mittelpunkt 29,10% / 11,70° auf und
- der dritte Radius weist den Mittelpunkt 4,25% / 30,00° auf,
wobei die Mittelpunkte der Radien in Polarkoordinaten ausgehend von der Symmetrieebene C mit 0° im Gegenuhrzeigersinn angegeben sind, wobei die Polarkoordinaten in der Form "Radius / Winkel" angegeben sind und wobei der Radius in Prozent der Bezugslänge angegeben ist.

In der Fig. 3 sind anstelle der Polarkoordinaten kartesische Koordinaten angegeben, wobei der Nullpunkt für das Polarkoordinatensystem und das kartesischen Koordinatensystem jeweils in der Rotationsachse A des Rotors 3 liegen.

Die Bezugslänge kann beliebig je nach gewünschter Größe des Rotors 3 gewählt werden. Wird als Bezugslänge beispielsweise 100 mm gewählt, so ergibt sich für den ersten Radius ein Absolutwert von 71,5 mm und so weiter.

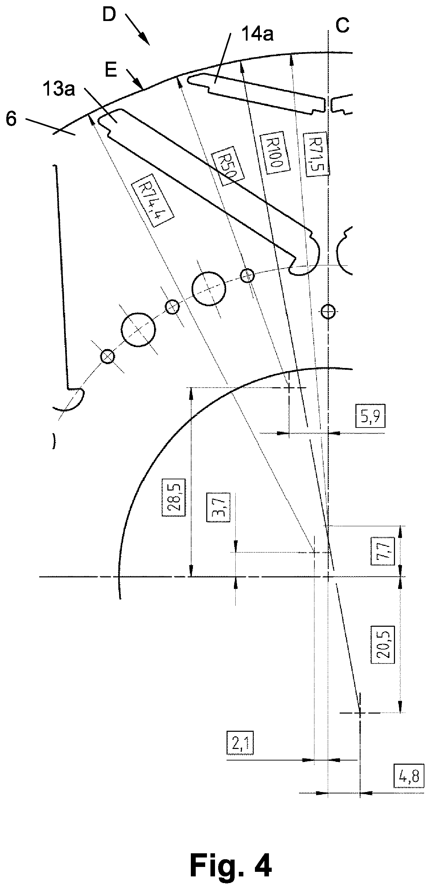

Fig. 4 zeigt eine Detaildarstellung des Halbsektors D einer Ausführungsform der Erfindung. Die Außenkontur E des Rotors 3 beziehungsweise des Rotorblechpakets 6 ist in einem Halbsektor D in diesem Beispiel durch genau vier unterschiedliche Radien mit vier unterschiedlichen Mittelpunkten gebildet.

Vorzugsweise sind die Radien ausgehend von der Symmetrieebene C von einem ersten Radius bis zu einem vierten Radius im Gegenuhrzeigersinn gereiht, wobei
- der erste Radius 71,5% einer Bezugslänge beträgt,
- der zweite Radius 100% der Bezugslänge beträgt,
- der dritte Radius 50% der Bezugslänge beträgt und
- der vierte Radius 74,4% der Bezugslänge beträgt.

Bevorzugt sind die Mittelpunkte der genannten Radien dabei wie folgt angeordnet:
- der erste Radius weist den Mittelpunkt 7,70% / 0,00 ° auf,
- der zweite Radius weist den Mittelpunkt 21,05% / 193,18° auf,
- der dritte Radius weist den Mittelpunkt 29,10% / 11,70° auf und
- der vierte Radius weist den Mittelpunkt 4,25% / 29,58° auf,
wobei die Mittelpunkte der Radien in Polarkoordinaten ausgehend von der Symmetrieebene C mit 0° wiederum im Gegenuhrzeigersinn angegeben sind, wobei die Polarkoordinaten in der Form "Radius / Winkel" angegeben sind und wobei der Radius in Prozent der Bezugslänge angegeben ist.

In der Fig. 4 sind anstelle der Polarkoordinaten ebenfalls kartesische Koordinaten angegeben, wobei der Nullpunkt für das Polarkoordinatensystem und das kartesischen Koordinatensystem jeweils in der Rotationsachse A des Rotors 3 liegen. Die Bezugslänge kann wiederum beliebig je nach gewünschter Größe des Rotors 3 gewählt werden. Wird als Bezugslänge 100 mm gewählt, so ergibt sich für den ersten Radius wieder ein Absolutwert von 71,5 mm und so weiter.

Durch die vorgeschlagenen Maßnahmen wird die Breite des Luftspalts zwischen dem Rotor 3 und dem Stator 5 so variiert, dass sich eine Verflachung der Drehmomentschwankungen im Betrieb der elektrischen Maschine 1 ergibt. Die elektrische Maschine 1 läuft daher ruhiger. Vorteilhaft basieren die vorgeschlagenen Maßnahmen auf einfachen Angaben, und es kann auf die Angabe einer komplizierten mathematischen Formel für die Außenkontur verzichtet werden. Die Datenweitergabe wird dadurch vereinfacht, und der Rotor 3 ist leichter herstellbar.

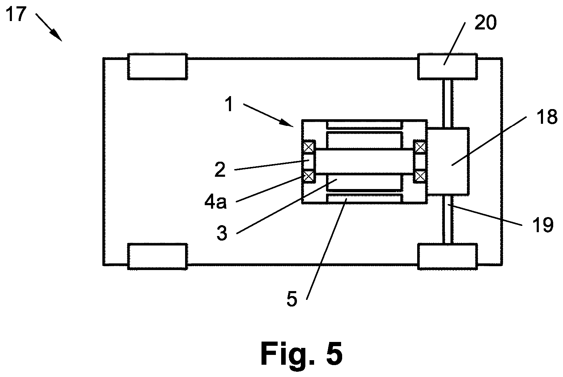

Die Fig. 5 zeigt schließlich die in ein Fahrzeug 17 eingebaute elektrische Maschine 1. Das Fahrzeug 17 weist wenigstens zwei Achsen auf, von denen wenigstens eine angetrieben ist. Konkret ist der Elektromotor 1 mit einem optionalen Getriebe 18 verbunden. An das Getriebe 18 schließen die Halbachsen 19 der Hinterachse an. An den Halbachsen 19 sind schließlich die angetriebenen Räder 20 montiert. Der Antrieb des Fahrzeugs 17 erfolgt zumindest teilweise oder zeitweise durch die elektrische Maschine 1. Das heißt, die elektrische Maschine 1 kann zum alleinigen Antrieb des Fahrzeugs 17 dienen oder zum Beispiel im Verbund mit einer Verbrennungskraftmaschine vorgesehen sein (Hybridantrieb).

Abschließend wird festgehalten, dass der Schutzbereich durch die Patentansprüche bestimmt ist. Die Beschreibung und die Zeichnungen sind jedoch zur Auslegung der Ansprüche heranzuziehen. Die in den Figuren enthaltenen Merkmale können beliebig ausgetauscht und miteinander kombiniert werden. Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

## Patentansprüche

1. Rotor (3) für eine elektrische Maschine (1), umfassend ein in mehrere Sektoren (B) untergliedertes Rotorblechpaket (6), in denen jeweils eine Permanentmagnetanordnung angeordnet ist, die zwei erste, von einer Rotationsachse (A) des Rotors (3) aus gesehen, V-förmig und symmetrisch bezüglich einer den Sektor (B) in zwei Halbsektoren (D, D') teilenden Symmetrieebene (C) positionierte Permanentmagnete (13a, 13b) umfasst, wobei eine Außenkontur (E) des Rotorblechpakets (6) in einem jeweiligen Sektor (B) symmetrisch bezüglich der Symmetrieebene (C) verläuft, und die Außenkontur (E) des Rotorblechpakets (6) in einem Halbsektor (D, D') der Halbsektoren (D, D') durch genau vier unterschiedliche Radien mit ebenso vielen unterschiedlichen Mittelpunkten gebildet ist.

2. Rotor (3) nach Anspruch 1, **dadurch gekennzeichnet, dass** die Radien ausgehend von der Symmetrieebene (C) von einem ersten Radius bis zu einem vierten Radius im Gegenuhrzeigersinn gereiht sind und
- der erste Radius 71,5% einer Bezugslänge beträgt,
- der zweite Radius 100% der Bezugslänge beträgt,
- der dritte Radius 50% der Bezugslänge beträgt und
- der vierte Radius 74,4% der Bezugslänge beträgt.

3. Rotor (3) nach Anspruch 2, **dadurch gekennzeichnet, dass**
- der erste Radius den Mittelpunkt 7,70% / 0,00 ° aufweist,
- der zweite Radius den Mittelpunkt 21,05% / 193,18° aufweist,
- der dritte Radius den Mittelpunkt 29,10% / 11,70° aufweist und
- der vierte Radius den Mittelpunkt 4,25% / 29,58° aufweist,
wobei die Mittelpunkte der Radien in Polarkoordinaten ausgehend von der Symmetrieebene (C) mit 0° im Gegenuhrzeigersinn angegeben sind, wobei die Polarkoordinaten in der Form Radius / Winkel angegeben sind und wobei der Radius in Prozent der Bezugslänge angegeben ist.

4. Rotor (3) nach einem der Ansprüche 1 bis 3, **dadurch gekennzeichnet, dass** die Permanentmagnetanordnung zusätzlich zwei zweite, von der Rotationsachse (A) des Rotors (3) aus gesehen, V-förmig und symmetrisch bezüglich einer den Sektor (B) in zwei Halbsektoren (D, D') teilenden Symmetrieebene (C) positionierte Permanentmagnete (14a, 14b) umfasst.

5. Elektrische Maschine (1) mit einem Stator (5), **gekennzeichnet durch** einen Rotor (3) nach einem der Ansprüche 1 bis 4, der gegenüber dem Stator (5) um die Rotationsachse (A) des Rotors (3) drehbar gelagert ist.

6. Fahrzeug (17) mit wenigstens zwei Achsen, von denen wenigstens eine angetrieben ist, **dadurch gekennzeichnet dass** der besagte Antrieb zumindest teilweise oder zeitweise durch die elektrische Maschine (1) nach Anspruch 5 erfolgt.

## Claims

1. Rotor (3) for an electric machine (1), comprising a rotor laminated core (6) divided into multiple sectors (B), each of which contains a permanent magnet arrangement that includes two first permanent magnets (13a, 13b) positioned, as seen from a rotational axis (A) of the rotor (3), in a V-shape and symmetrically with respect to a symmetry plane (C) dividing the sector (B) into two half-sectors (D, D'), wherein an outer contour (E) of the rotor laminated core (6) runs in each respective sector (B) symmetrically with respect to the symmetry plane (C), and the outer contour (E) of the rotor laminated core (6) in one half-sector (D, D') of the half-sectors (D, D') is formed by exactly four different radii with equally as many different center points.

2. Rotor (3) according to claim 1, **characterized in that** the radii, starting from the symmetry plane (C), are arranged in a counterclockwise order from a first radius to a fourth radius, and:
the first radius is 71.5% of a reference length,
the second radius is 100% of the reference length,
the third radius is 50% of the reference length, and
the fourth radius is 74.4% of the reference length.

3. Rotor (3) according to claim 2, **characterized in that**:
the first radius has its center point at 7.70% / 0.00°,
the second radius has its center point at 21.05% / 193.18°,
the third radius has its center point at 29.10% / 11.70°, and
the fourth radius has its center point at 4.25% / 29.58°,
wherein the center points of the radii are given in polar coordinates starting from the symmetry plane (C) at 0° in a counterclockwise direction, wherein the polar coordinates are specified in the form of radius/angle, with the radius given as a percentage of the reference length.

4. Rotor (3) according to any of claims 1 to 3, **characterized in that** the permanent magnet arrangement additionally comprises two second permanent magnets (14a, 14b), positioned, as seen from the rotational axis (A) of the rotor (3), in a V-shape and symmetrically with respect to a symmetry plane (C) dividing the sector (B) into two half-sectors (D, D').

5. Electric machine (1) with a stator (5), **characterized by** a rotor (3) according to any one of claims 1 to 4, which is rotatably mounted with respect to the stator (5) around the rotational axis (A) of the rotor (3).

6. Vehicle (17) with at least two axles, of which at least one is driven, **characterized in that** the said drive is at least partially or temporarily performed by the electric machine (1) according to claim 5.

## Revendications

1. Rotor (3) pour une machine électrique (1), comprenant un paquet de tôles de rotor (6) subdivisé en plusieurs secteurs (B), dans chacun desquels est disposé un agencement d'aimants permanents, lequel comprend deux premiers aimants permanents (13a, 13b) positionnés, vus à partir d'un axe de rotation (A) du rotor (3), en forme de V et de manière symétrique par rapport à un plan de symétrie (C) divisant le secteur (B) en deux demi-secteurs (D, D'), la contour extérieur (E) du paquet de tôles de rotor (6) s'étendant dans chaque secteur (B) de manière symétrique par rapport au plan de symétrie (C), et la contour extérieur (E) du paquet de tôles de rotor (6) dans un demi-secteur (D, D') étant formée exactement par quatre rayons différents, chacun ayant un centre différent.

2. Rotor (3) selon la revendication 1, **caractérisé en ce que** les rayons, à partir du plan de symétrie (C), sont disposés dans le sens antihoraire du premier au quatrième rayon, et que :
le premier rayon représente 71,5 % d'une longueur de référence,
le deuxième rayon représente 100 % de la longueur de référence,
le troisième rayon représente 50 % de la longueur de référence, et
le quatrième rayon représente 74,4 % de la longueur de référence.

3. Rotor (3) selon la revendication 2, **caractérisé en ce que** :
le premier rayon a pour centre 7,70 % / 0,00°,
le deuxième rayon a pour centre 21,05 % / 193,18°,
le troisième rayon a pour centre 29,10 % / 11,70°, et
le quatrième rayon a pour centre 4,25 % / 29,58°,
les centres des rayons étant exprimés en coordonnées polaires à partir du plan de symétrie (C) à 0°, dans le sens antihoraire, les coordonnées polaires étant données sous la forme rayon / angle, et le rayon étant exprimé en pourcentage de la longueur de référence.

4. Rotor (3) selon l'une quelconque des revendications 1 à 3, **caractérisé en ce que** l'agencement d'aimants permanents comprend en outre deux deuxièmes aimants permanents (14a, 14b), positionnés, vus à partir de l'axe de rotation (A) du rotor (3), en forme de V et de manière symétrique par rapport au plan de symétrie (C) divisant le secteur (B) en deux demi-secteurs (D, D').

5. Machine électrique (1) avec un stator (5), **caractérisée par** un rotor (3) selon l'une quelconque des revendications 1 à 4, monté rotatif par rapport au stator (5) autour de l'axe de rotation (A) du rotor (3).

6. Véhicule (17) comportant au moins deux essieux, dont au moins un est entraîné, **caractérisé en ce que** ladite propulsion est assurée au moins partiellement ou temporairement par la machine électrique (1) selon la revendication 5.
